# EUROPÄISCHE PATENTSCHRIFT

(11) **EP 2 869 434 B1**
(45) Veröffentlichungstag und Bekanntmachung des Hinweises auf die Patenterteilung: **18.07.2018**
(21) Anmeldenummer: 14190312.0
(22) Anmeldetag: 24.10.2014
(51) Int. Cl.: H02K 1/27

(54) **Motor zum Antreiben einer Pumpe**
Motor for driving a pump
Moteur destiné à entraîner une pompe

(30) Priorität: 05.11.2013 DE 102013222441
(43) Veröffentlichungstag der Anmeldung: 06.05.2015
(73) Patentinhaber: Mahle International GmbH, 70376 Stuttgart (DE)
(72) Erfinder: Helmis, Martin, 50825 Köln (DE); Krappel, Michael, 70378 Stuttgart (DE); Neubauer, Andreas, 71554 Weissach i.T. (DE); Riemay, Thomas, 71404 Korb (DE)
(74) Vertreter: BRP Renaud & Partner mbB Rechtsanwälte Patentanwälte Steuerberater

(56) Entgegenhaltungen:
- EP-A1- 0 195 741
- DD-A1- 222 745
- US-A1- 2013 270 950

## Beschreibung

Die vorliegende Erfindung betrifft einen Motor zum Antreiben einer Pumpe gemäß dem Oberbegriff des Anspruchs 1. Die Erfindung betrifft außerdem eine Kühlmittelpumpe zum Pumpen einer Kühlflüssigkeit mit einem derartigen Motor.

Permanentmagneterregte Elektromoren lassen sich in unterschiedliche Ausführungsarten unterscheiden. Ein Innenläufer besteht beispielsweise aus einem Rotor sowie einem diesen umgebenden Stator, wobei im Rotor Permanentmagnete und im Stator Elektromagnete angeordnet sind, die durch ein Bestromen ein elektromagnetisches Feld erzeugen und damit die Drehbewegung des Rotors bewirken. Je nach Ausführung kann weitergehend zwischen Oberflächenmagneten-und vergrabener Anordnung unterschieden werden. Bei den vergrabenen Magneten wiederum gibt es ebenfalls unterschiedliche Ausführungsarten. Bei einem Innenläufer mit Speichenanordnung, bei der im Rotor üblicherweise sich in Radialrichtung erstreckende Permanentmagnete eingesetzt werden, ist deren Breite durch den Innenumfang des Rotors bzw. eine dort angeordnete Welle beschränkt. Die einzelnen Permanentmagnete stehen somit strahlenförmig in radialer Richtung ab, wobei sie sich radial innen unter Umständen sogar berühren, wogegen sie radial außen in Umfangsrichtung deutlich voneinander beabstandet sind. Durch die keilförmigen Zwischenräume zwischen den einzelnen Permanentmagneten reduziert sich die Flussdichte nach radial außen erheblich, so dass das Material hier nicht entsprechend ausgenutzt ist. Aus diesem Grund werden in diesem Bereich sogar manchmal Aussparungen vorgesehen, um beispielsweise Gewicht zu sparen.

Aus der EP 0 195 741 A1 ist ein gattungsgemäßer Motor zum Antreiben beispielsweise einer Pumpe mit einem Rotor und einem diesen umgebenden Stator bekannt, wobei im Rotor Permanentmagnet und im Stator Elektromagnete angeordnet sind. Zumindest ein Permanentmagnet im Rotor ist dabei aus zumindest zwei Einzelmagneten zusammengesetzt und nimmt in Radialrichtung nach außen hin hinsichtlich seiner Breite zu.

Die vorliegende Erfindung beschäftigt sich mit dem Problem, für einen Motor der gattungsgemäßen Art eine verbesserte Ausführungsform anzugeben, die sich insbesondere durch eine erhöhte Leistung auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, die bislang stabförmigen und in Radialrichtung angeordneten Permanentmagnete in einem Rotor eines Elektromotors nunmehr einer V-Form zumindest anzunähern und damit die magnetische Flussdichte in einem radial äußeren Bereich deutlich zu steigern. Die Permanentmagnete sind dabei im Rotor eines Motors zum Antreiben einer Pumpe, insbesondere einer Kühlmittelpumpe, angegeben, wobei der Rotor von einem Stator umgeben ist. In diesem Stator wiederum sind Elektromagnete angeordnet, die durch eine entsprechende Bestromung ein elektromagnetisches Feld erzeugen und dadurch den Rotor in eine Drehbewegung versetzen können. Erfindungsgemäß ist nun zumindest ein Permanentmagnet, vorzugsweise sämtliche Permanentmagnete im Rotor, aus jeweils zumindest zwei Einzelmagneten zusammengesetzt und nimmt in Radialrichtung nach außen hinsichtlich seiner Breite zu. Die Einzelmagnete sind dabei als Permanentmagnet ausgebildet. Je nach Anzahl der Einzelmagnete kann dabei der Permanentmagnet hinsichtlich seiner bisher stabförmigen Form nunmehr einer deutlich günstigeren V-Form zumindest angenähert werden, wodurch insbesondere die magnetische Flussdichte im Außenbereich des Rotors nicht wie bisher bei stabförmigen Permanentmagneten abnimmt. Durch das Zusammensetzen der Permanentmagnete aus Einzelmagneten lässt sich der Permanentmagnet vergleichsweise kostengünstig herstellen, beispielsweise gänzlich im Unterschied zu insbesondere keilförmig geschliffenen Permanentmagneten, die in der Herstellung vergleichsweise teuer sind.

Erfindungsgemäß ist zumindest ein Permanentmagnet aus zwei quaderförmigen Einzelmagneten unterschiedlicher Größe zusammengesetzt, wobei der größere Einzelmagnet radial außen angeordnet ist. Eine derartige Ausführungsform des erfindungsgemäßen Permanentmagneten stellt den einfachsten Aufbau dar, um den bisher rein quaderförmigen Permanentmagneten an die optimierte Keilform anzupassen. Der Permanentmagnet kann dabei aus einem größeren und einem kleineren jeweils quaderförmigen Einzelmagnet zusammengesetzt, beispielsweise zusammengeklebt, werden, so dass ein derart hergestellter Permanentmagnet bereits eine deutliche Verbesserung der magnetischen Flussdichte im Außenbereich des Rotors bewirkt, ohne dass die Kosten für einen derartigen Permanentmagneten signifikant ansteigen.

Bei einer alternativen Ausführungsform der erfindungsgemäßen Lösung ist zumindest ein Permanentmagnet aus drei quaderförmigen Einzelmagneten zusammengesetzt, wobei radial außen zwei Einzelmagnete in Umfangsrichtung nebeneinander angeordnet sind. Hierdurch lässt sich eine deutlich stumpfere Keilform des Permanentmagneten erzielen, wobei die Herstellung eines derartigen Permanentmagneten besonders dann von Vorteil ist, sofern die Einzelmagnete als Gleichteile ausgebildet und beispielsweise in der Art eines Läuferverbandes zusammengesetzt sind. Selbstverständlich ist ein derartiger Aufbau des Permanentmagneten auch aus einer Vielzahl einzelner quaderförmiger Einzelmagnete denkbar, die keilförmig zueinander angeordnet sind, wobei mit zunehmender Anzahl der Einzelmagnete die Keilform immer besser angenähert werden kann. Zweckmäßig weist zumindest ein Permanentmagnet zumindest einen keilförmigen Einzelmagneten auf. Eine weitere besonders optimierte Ausführungsform des Permanentmagneten kann dadurch erhalten werden, indem beispielsweise ein quaderförmiger Einzelmagnet mit einem keilförmigen Einzelmagnet verklebt wird. Der keilförmige Einzelmagnet wird dabei im späteren Rotorverbund radial innen angeordnet. Keilförmig bedeutet in diesem Fall nicht unmittelbar dreiecksförmig, sondern kann im Querschnitt auch die Gestalt eines Trapezes aufweisen. Hierdurch ließe sich immer noch ein optimierter keilförmiger Permanentmagnet herstellen, bei welchem lediglich der keilförmige Einzelmagnet hinsichtlich seiner Herstellungskosten höher einzustufen ist. Durch die Kombination mit einem wiederum vergleichsweise kostengünstigen quaderförmigen Einzelmagnet liegt der Preis für einen derartigen Permanentmagneten jedoch deutlich unterhalb eines komplett einstückig trapez-/keilförmig geschliffenen Permanentmagneten. Zweckmäßig sind die Einzelmagnete miteinander verklebt oder verpresst, insbesondere in eine Halterung gepresst. Sowohl das Verkleben als auch das Verpressen stellen dabei kostengünstige fertigungstechnisch einfache Verbindungsverfahren her, die eine wirtschaftliche Herstellung der Permanentmagneten und damit auch des Motors erlauben.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch,
- Fig. 1: eine Querschnittsdarstellung durch einen erfindungsgemäßen Motor,
- Fig. 2a-d: unterschiedliche Ausführungsformen eines erfindungsgemäßen Permanentmagneten des Motors,
- Fig. 3: eine Kühlmittelpumpe mit einem erfindungsgemäßen Motor.

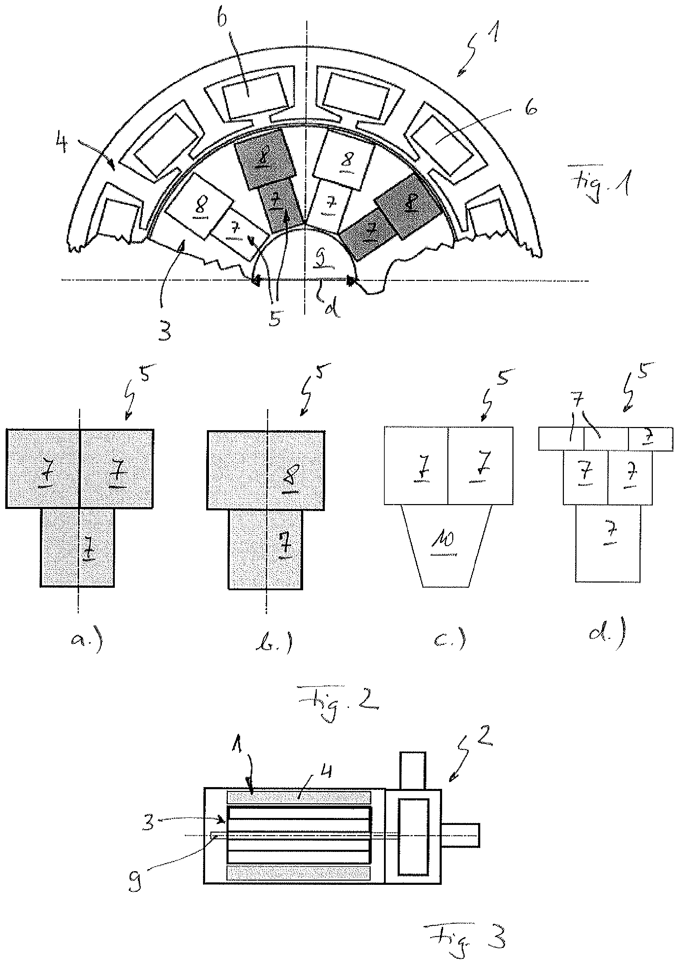

Entsprechend der Fig. 1, weist ein erfindungsgemäßer Motor 1, zum Antreiben einer Pumpe 2 (vgl. Fig. 3), insbesondere zum Antreiben einer Kühlmittelpumpe, einen Rotor 3 sowie einen diesen umgebenden Stator 4 auf. Im Rotor 3 sind dabei Permanentmagnete 5 angeordnet, wogegen im Stator 4 Elektromagnete 6, beispielsweise in der Art von Spulen, angeordnet sind. Durch Bestromen der Elektromagnete 6 erzeugen diese ein elektromagnetisches Feld, wodurch der Rotor 3 in eine Drehbewegung versetzt wird. Um nun einen Zwischenraum zwischen den einzelnen Permanentmagneten 5 im Rotor 3, insbesondere in einem radial äußeren Bereich des Rotors 3, möglichst gering halten zu können, ist erfindungsgemäß zumindest einer der Permanentmagnete 5 aus zumindest zwei Einzelmagneten 7, 8 zusammengesetzt und nimmt in Radialrichtung nach außen hinsichtlich seiner Abmessungen in Umfangsrichtung Breite zu (vgl. auch die Fig. 2a-d).

Im einfachsten Fall ist dabei der Permanentmagnet 5 aus zwei quaderförmigen Einzelmagneten 7, 8 unterschiedlicher Größe zusammengesetzt, wobei der größere Einzelmagnet 8 radial außen am Rotor 3 angeordnet ist, so dass der Permanentmagnet 5 eine V-förmige bzw. keil-/trapezförmige Gestalt nimmt. Die Breite der Einzelmagnete 7 radial innen am Rotor 3 ist bei dem Innendurchmesser d des Rotors 3, der im Wesentlichen dem Außendurchmesser einer Welle 9 entspricht, begrenzt. Durch die an die optimale V-Form angenäherte Stufenform kann die magnetische Flussdichte zwischen benachbarten Einzelmagneten 8 im radialen äußeren Bereich des Rotors 3 gesteigert und dadurch die Leistung des Motors 1 erhöht werden.

Generell kann der Permanentmagnet 5 entsprechend den Fig. 2a-2d zusammengesetzt sein. Die Fig. 2b zeigt dabei den Permanentmagneten 5, wie dieser gemäß der Fig. 1 in eingebautem Zustand angeordnet ist. Die Fig. 2a wiederum zeigt einen Permanentmagneten 5, der aus drei quaderförmigen Einzelmagneten 7 zusammengesetzt ist, wobei radial außen zwei Einzelmagnete 7 in Umfangsrichtung nebeneinander angeordnet sind. Günstigstenfalls sind dabei die Einzelmagnete 7 als Gleichteile ausgebildet, wodurch eine vergleichsweise kostengünstige Herstellung ermöglicht wird.

Betrachtet man die Fig. 2c, so kann man erkennen, dass der dort gezeigte Permanentmagnet 5 einen keil-/trapezförmigen Einzelmagneten 10 gepaart mit zwei Einzelmagneten 7 aufweist. Keil- bzw. trapezförmig bedeutet dabei, dass der Einzelmagnet 10 beispielsweise im Querschnitt eine Dreiecksform oder aber eine Trapezform besitzt. Gemäß der Fig. 2d ist ein Permanentmagnet 5 gezeigt, der aus einer Vielzahl von Einzelmagneten 7 unterschiedlichster Größen zusammengesetzt ist. Auch diesem Permanentmagneten 5 ist dabei gemein, dass die Querschnittsform einem Kreissegment angenähert ist, wodurch insbesondere der Abstand zwischen zwei benachbarten Permanentmagneten 5 in Umfangsrichtung an einem radial äußeren Rand des Rotors 3 reduziert und dadurch dort die magnetische Flussdichte gesteigert werden kann. Die gemäß den Fig. 2a-2d dargestellten möglichen Ausführungsformen des erfindungsgemäßen Permanentmagneten 5 sind dabei lediglich rein exemplarisch zu verstehen, so dass rein theoretisch auch weitere Ausführungsformen mit unterschiedlich gestalteten bzw. angeordneten Einzelmagneten 7, 8, 10 denkbar sind, die jedoch alle versuchen, eine kreissegmentartige Form des Permanentmagneten 5 zu erzielen.

Zum Verbinden der einzelnen Einzelmagnete 7, 8, 10 miteinander, können diese beispielsweise miteinander verklebt, verpresst und/oder in eine Halterung eingepresst werden. Der Zusammenbau der erfindungsgemäßen Permanentmagnete aus quaderförmigen Einzelmagneten 7, 8 stellt dabei eine äußerst kostengünstige Möglichkeit dar, einen Permanentmagneten 5 mit kreissegmentartigem Querschnitt zu erzielen. Selbstverständlich wäre auch ein Schleifen der Einzelmagnete denkbar, wie dies beispielsweise bei dem Einzelmagneten 10 der Fall sein kann, wobei dieses Schleifen vergleichsweise teuer ist. Durch eine Kombination eines kleinen geschliffenen Einzelmagneten 10 mit zwei kostengünstigen Einzelmagneten 7 kann jedoch der Preis für den Permanentmagneten 5 insgesamt trotzdem vergleichsweise günstig gehalten werden.

Fig. 3 zeigt schließlich noch die Anordnung des erfindungsgemäßen Motors 1 in einer Pumpe 2, beispielsweise in einer Kühlmittelpumpe 2', mit welcher mit einem entsprechenden Läuferrad Kühlmittel gefördert wird. Selbstverständlich kann die Pumpe 2 dabei auch alle möglichen anderen Medien, wie beispielsweise Öl, fördern. Durch die mit den erfindungsgemäßen Permanentmagneten 5 bestückte Pumpe 2 kann aufgrund ihrer gesteigerten Leistung Bauraum optimiert hergestellt werden, so dass für die gleiche Förderleistung kleinere Motoren 1 eingesetzt werden können.

## Patentansprüche

1. Motor (1) zum Antreiben einer Pumpe (2), insbesondere einer Kühlmittelpumpe (2'),
mit einem Rotor (3) und einem diesen umgebenden Stator (4), wobei im Rotor (3) Permanentmagnete (5) und im Stator (4) Elektromagnete (6) angeordnet sind, wobei zumindest ein Permanentmagnet (5) im Rotor (3) aus zumindest zwei Einzelmagneten (7,8,10) zusammengesetzt ist und in Radialrichtung nach außen hinsichtlich seiner Breite zunimmt,
**dadurch gekennzeichnet, dass**
- zumindest ein Permanentmagnet (5) aus zwei quaderförmigen Einzelmagneten (7,8) unterschiedlicher Größe zusammengesetzt ist, wobei der größere Einzelmagnet (8) radial außen angeordnet ist, oder
- zumindest ein Permanentmagnet (5) aus drei quaderförmigen Einzelmagneten (7) zusammengesetzt ist, wobei radial außen zwei Einzelmagnete (7) in Umfangsrichtung nebeneinander angeordnet sind.

2. Motor nach Anspruch 1 zweite Alternative,
**dadurch gekennzeichnet, dass**
die Einzelmagnete (7) als Gleichteile ausgebildet sind.

3. Motor nach einem der Ansprüche 1 oder 2, **dadurch gekennzeichnet, dass** die Einzelmagnete (7, 8,10) miteinander verklebt oder verpresst sind.

4. Kühlmittelpumpe (2') zum Pumpen einer Kühlflüssigkeit, insbesondere in einem Kraftfahrzeug, mit einem Motor (1) nach einem der Ansprüche 1 bis 3.

## Claims

1. Motor (1) for driving a pump (2), in particular a coolant pump (2'),
with a rotor (3) and a surrounding stator (4), wherein in the rotor (3) permanent magnets (5) and in the stator (4) electromagnets (6) are disposed, wherein at least one permanent magnet (5) in the rotor (3) is composed of at least two individual magnets (7, 8, 10) and its width expands outwards in the radial direction,
**characterised in that**
- at least one permanent magnet (5) is composed of two rectangular individual magnets (7, 8) of different sizes, wherein the larger individual magnet (8) is disposed radially outwards, or
- at least one permanent magnet (5) is composed of three rectangular individual magnets (7), wherein radially outside two individual magnets (7) are disposed side by side in the circumferential direction.

2. Motor according to claim 1, second alternative,
**characterised in that**
the individual magnets (7) are designed as equal parts.

3. Motor according to one of claims 1 or 2,
**characterised in that**
the individual magnets (7, 8, 10) are adhesive-bonded or pressed together.

4. Coolant pump (2') for pumping a cooling liquid, in particular in a motor vehicle, with a motor (1) according to one of claims 1 to 3.

## Revendications

1. Moteur (1) pour entraîner une pompe (2), en particulier une pompe de liquide de refroidissement (2'),
avec un rotor (3) et avec un stator (4) entourant celui-ci, dans lequel des aimants permanents (5) sont agencés dans le rotor (3) et des électroaimants (6) sont agencés dans le stator (4), dans lequel au moins un aimant permanent (5) dans le rotor (3) est composé d'au moins deux aimants individuels (7, 8, 10) et sa largeur augmente en allant vers l'extérieur en direction radiale,
**caractérisé en ce que**
- au moins un aimant permanent (5) est composé de deux aimants individuels (7, 8) parallélépipédiques de différentes grandeurs, l'aimant individuel (8) le plus grand étant agencé radialement à l'extérieur, ou
- au moins un aimant permanent (5) est composé de trois aimants individuels (7) parallélépipédiques, deux aimants individuels (7) étant agencés radialement à l'extérieur et l'un à côté de l'autre en direction circonférentielle.

2. Moteur selon la revendication 1 second volet de l'alternative,
**caractérisé en ce que**
les aimants individuels (7) sont réalisés comme des pièces identiques.

3. Moteur selon l'une quelconque des revendications 1 ou 2,
**caractérisé en ce que**
les aimants individuels (7, 8, 10) sont collés ou pressés ensemble.

4. Pompe de liquide de refroidissement (2') destinée à pomper un liquide de refroidissement, en particulier dans un véhicule automobile, avec un moteur (1) selon l'une quelconque des revendications 1 à 3.
